# EUROPEAN PATENT APPLICATION

(11) **EP 4 834 544 A1**
(43) Date of publication of application: **04.11.2026**
(21) Application number: 24911970.2
(22) Date of filing: 24.10.2024
(51) Int. Cl.: B25J 15/06

(54) **BERNOULLI GRIPPER**

(30) Priority: 25.12.2023 JP 2023217830
(71) Applicant: SMC Corporation, Tokyo 104-0031 (JP)
(72) Inventor: SAKA, Hiroaki, Kashiwa-shi, Chiba 277-0871 (JP); FUKUSHIMA, Makoto, Kashiwa-shi, Chiba 277-0871 (JP)
(74) Representative: Keil & Schaafhausen Patentanwälte PartGmbB
(86) International application number: PCT/JP2024/037975
(87) International publication number: WO 2025/142077

(57) **Abstract**

A Bernoulli gripper (10) comprises a columnar body (12) and a cover body (14) attached to the body (12). The body (12) has a circumferential edge part (132) that smoothly curves from a recess (130) of a suction part (122) formed at the tip of the body (12) to a side wall (134). The cover body (14) has: a central section (140) positioned at a portion corresponding to the center of the recess (130); and a plurality of branch sections (142) extending in the radial direction (D2) of the body (12) at intervals from the central section (140) and reaching the side wall (134) through the circumferential edge part (132).

## Description

### TECHNICAL FIELD

The present disclosure relates to a Bernoulli gripper.

### BACKGROUND ART

JP 2015-126174 A discloses a substrate holding device (Bernoulli gripper) including a chuck member for holding a substrate. The Bernoulli gripper includes a cylindrical columnar main body (outer chuck member) and a suction unit (inner chuck member). The suction unit is formed at the distal end of the main body and has a recess at the center. At the distal end of the main body, the substrate is suctioned to the suction unit by a negative pressure generated by the gas being discharged in the radial direction of the main body.

### SUMMARY OF THE INVENTION

A Bernoulli gripper capable of properly holding a workpiece has been awaited.

The present invention has the object of meeting the aforementioned challenge.

An aspect of the present disclosure is characterized by a Bernoulli gripper including a main body having a columnar shape, a suction portion formed at a distal end of the main body and including a recessed portion at a center of the suction portion, a nozzle configured to blow air to the recessed portion in a radial direction of the main body, and a cover body attached to the main body so as to cover a part of the suction portion and a part of a side wall of the main body, wherein the main body includes a peripheral edge portion smoothly curved from the recessed portion to the side wall, and wherein the cover body includes a central portion located at a position corresponding to a center of the recessed portion, and a plurality of branch portions extending from the central portion in the radial direction and spaced apart from each other, the branch portions extending to the side wall via the peripheral edge portion.

According to the above aspect, the workpiece can be held properly.

The above and other objects, features, and advantages of the present invention will be easily understood from the following description when taken in conjunction with the accompanying drawings.

### BRIEF DESCRIPTION OF DRAWINGS

[FIG. 1] FIG. 1 is a perspective view of a Bernoulli gripper according to a first embodiment;
[FIG. 2] FIG. 2 is a side view of the Bernoulli gripper according to the first embodiment;
[FIG. 3] FIG. 3 is a cross-sectional view of the Bernoulli gripper taken along line III-III of FIG. 2;
[FIG. 4] FIG. 4 is a perspective view of a Bernoulli gripper according to a second embodiment;
[FIG. 5] FIG. 5 is a side view of the Bernoulli gripper according to the second embodiment;
[FIG. 6] FIG. 6 is a cross-sectional view of the Bernoulli gripper taken along line VI-VI of FIG. 5;
[FIG. 7] FIG. 7 is a view of the distal end side of the Bernoulli gripper as viewed in the axial direction;
[FIG. 8] FIG. 8 is a perspective view of a cover body according to Exemplary Modification 1; and
[FIG. 9] FIG. 9 is a cross-sectional view of a Bernoulli gripper according to Exemplary Modification 2.

### DETAILED DESCRIPTION OF THE INVENTION

There is a case where one of a plurality of relatively small workpieces such as semiconductor chips is held by a Bernoulli gripper. In this case, there is a concern that the gas discharged from the distal end of the main body of the Bernoulli gripper in the radial direction of the main body may blow off other workpieces located around the workpiece to be held.

Further, there is a case where a relatively thin workpiece such as a film is held by a Bernoulli gripper. In this case, the workpiece suctioned to the drawing unit of the Bernoulli gripper may vibrate due to the gas discharged from the distal end of the main body of the Bernoulli gripper in the radial direction of the main body.

The present disclosure proposes a Bernoulli gripper that meets the aforementioned challenge.

### <First Embodiment>

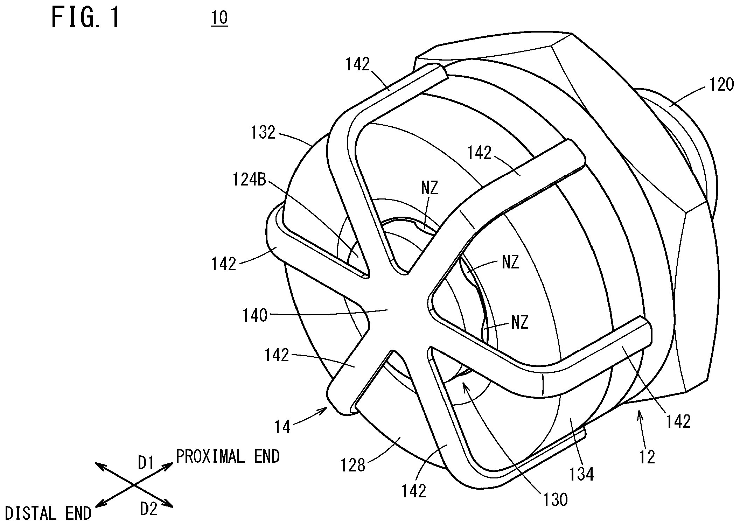

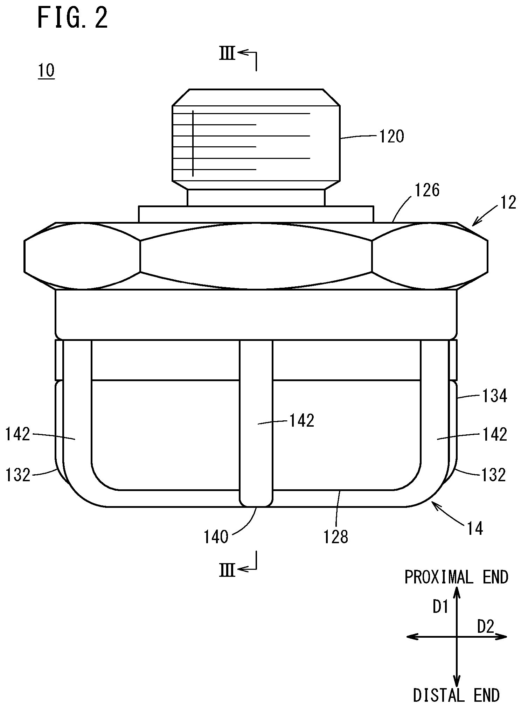

FIG. 1 is a perspective view of a Bernoulli gripper 10 according to a first embodiment. FIG. 2 is a side view of the Bernoulli gripper 10 according to the first embodiment. The Bernoulli gripper 10 is a gripper that radially ejects a fluid to generate a negative pressure. The Bernoulli gripper 10 is attached to a distal end of a robot arm provided in an automated factory line or the like, and is used for gripping and conveying a workpiece.

The Bernoulli gripper 10 includes a main body 12 and a cover body 14. The main body 12 is a member that generates a negative pressure by radially ejecting air (compressed air) supplied from an air supply device. The cover body 14 is a member that covers a part of the main body 12. The cover body 14 is a member separate from the main body 12 and is attached to the main body 12.

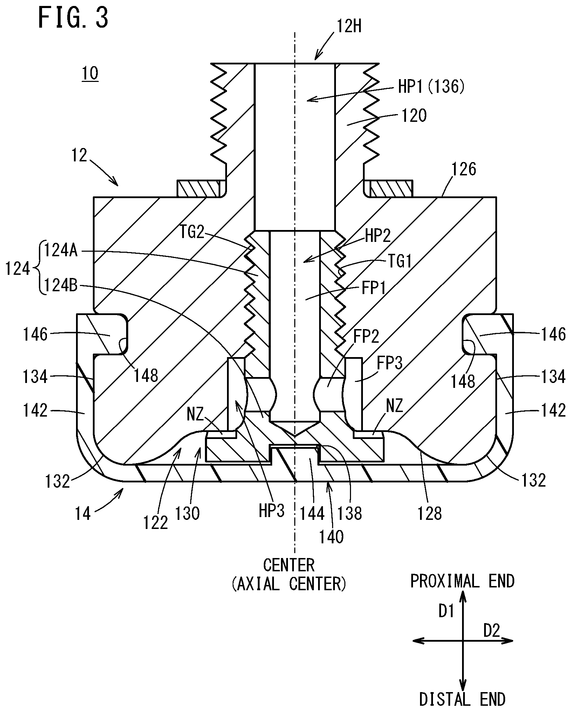

FIG. 3 is a cross-sectional view of the Bernoulli gripper 10 taken along line III-III of FIG. 2. The movable main body 12 is formed in a columnar shape. In the present embodiment, the main body 12 is formed in a cylindrical columnar shape, but is not limited thereto. For example, the main body 12 may be formed in a polygonal columnar shape such as a hexagonal columnar shape.

The main body 12 includes an attachment/detachment portion 120, a suction portion 122, and a flow path member 124. The attachment/detachment portion 120 is a portion that can be attached to and detached from a holder provided at the distal end of the robot arm. The attachment/detachment portion 120 protrudes from a proximal end surface 126 of the main body 12. The attachment/detachment portion 120 is formed integrally with the main body 12, but may be formed separately from the main body 12. When the attachment/detachment portion 120 is formed separately from the main body 12, the attachment/detachment portion 120 is connected to the main body 12 by welding or the like, for example.

The suction portion 122 is a portion used for suctioning a workpiece. The suction portion 122 is formed at the distal end of the main body 12. The suction portion 122 has a gripper surface 128. The gripper surface 128 is an end surface formed at the distal end of the main body 12. The gripper surface 128 faces a workpiece. A recessed portion 130 is formed in the center of the suction portion 122 (gripper surface 128). The inner diameter of the recessed portion 130 gradually increases from the proximal end side toward the distal end side.

A peripheral edge portion 132 of the gripper surface 128 is smoothly curved from the recessed portion 130 to a side wall 134 of the main body 12. In other words, the peripheral edge portion 132 is formed by a curved surface so that the air blown out to the recessed portion 130 flows along the gripper surface 128 according to the Coanda effect and further flows along the side wall 134 of the main body 12.

The flow path member 124 is a member that guides the air supplied from the air supply device to the suction portion 122. The flow path member 124 is fixed to the main body 12 in a state of being inserted into a hole portion 12H of the main body 12. The hole portion 12H is a hollow portion formed inside the main body 12. The hole portion 12H is located at the center (axial center) of the main body 12 and extends in the axial direction D1 of the main body 12.

The hole portion 12H includes a proximal end side hole portion HP1, an intermediate hole portion HP2, and a distal end side hole portion HP3. The proximal end side of the proximal end side hole portion HP1 opens at the proximal end of the attachment/detachment portion 120, and the distal end side of the proximal end side hole portion HP1 is connected to the intermediate hole portion HP2. The intermediate hole portion HP2 is located between the proximal end side hole portion HP1 and the distal end side hole portion HP3, and has a screw groove TG1. The screw groove TG1 is formed on the inner circumferential surface of the main body 12 surrounding the hollow portion of the intermediate hole portion HP2. The proximal end side of the distal end side hole portion HP3 is connected to the intermediate hole portion HP2, and the distal end side of the distal end side hole portion HP3 opens at the gripper surface 128. The hole diameter of the distal end side hole portion HP3 is larger than the hole diameter of the proximal end side hole portion HP1 and the hole diameter of the intermediate hole portion HP2.

The flow path member 124 includes a rod portion 124A and a flange portion 124B. The rod portion 124A has a screw groove TG2 on an outer peripheral surface thereof, and the screw groove TG2 is capable of screw engagement with the screw groove TG1 of the intermediate hole portion HP2. The flow path member 124 is fixed to the main body 12 by screw engagement of the screw groove TG2 of the rod portion 124A with the screw groove TG1 of the intermediate hole portion HP2. In a state where the flow path member 124 is fixed to the main body 12, the proximal end side hole portion HP1 serves as a supply port 136. A tube for compressed air is connected to the supply port 136.

The flange portion 124B is connected to the distal end of the rod portion 124A. The flange portion 124B is widened in the radial direction D2 of the main body 12 from the proximal end side toward the distal end side. A part of the flange portion 124B is located at the center of the recessed portion 130. The distal end surface of the flange portion 124B extends in the radial direction D2 of the main body 12. A fitting portion 138 to which a part of the cover body 14 is fitted is formed in a distal end surface of the flange portion 124B. The fitting portion 138 is, for example, a cylindrical hole.

An axial flow path FP1 and a branch flow path FP2 is formed in the flow path member 124. The axial flow path FP1 and the branch flow path FP2 are located in the rod portion 124A. The proximal end portion of the axial flow path FP1 communicates with the supply port 136, and the distal end portion of the axial flow path FP1 communicates with the branch flow path FP2. The branch flow path FP2 extends in the radial direction D2 of the main body 12 and communicates with an annular flow path FP3.

The annular flow path FP3 and nozzles NZ are formed between the flow path member 124 and the main body 12. The annular flow path FP3 is a clearance between the inner peripheral surface of the distal end side hole portion HP3 and the outer peripheral surface of the flow path member 124. The annular flow path FP3 extends annularly so as to surround the outer peripheral portion of the flow path member 124.

The nozzles NZ are clearances between the gripper surface 128 and the outer peripheral surface of the flow path member 124. The nozzles NZ communicate with the annular flow path FP3 and the recessed portion 130. The openings of the nozzles NZ are located on the side portion of the flange portion 124B and open in the radial direction D2 of the main body 12 (see FIG. 1). The nozzles NZ blow out the compressed air in the annular flow path FP3 to the recessed portion 130 in the radial direction D2 of the main body 12.

The cover body 14 is attachable to and detachable from the main body 12. In the present embodiment, the cover body 14 is an elastic body, but need not necessarily be an elastic body. The cover body 14 has a central portion 140 and a plurality of branch portions 142. The central portion 140 is located at a position corresponding to the center of the suction portion 122 (the gripper surface 128). A projection 144 projecting toward the main body 12 is formed in the central portion 140. The projection 144 is fitted to the fitting portion 138. The fitting of the projection 144 into the fitting portion 138 suppresses the positional deviation of the cover body 14 with respect to the main body 12.

The plurality of branch portions 142 extend from the central portion 140 in the radial direction D2 of the main body 12 and are spaced apart from each other, and extend to the side wall 134 via the peripheral edge portion 132. The portions of the main body 12 located between the branch portions 142 are not covered with the cover body 14 and are exposed from the cover body 14. The plurality of branch portions 142 are in contact with the peripheral edge portion 132, but need not necessarily be in contact with the peripheral edge portion 132. The plurality of branch portions 142 are not in contact with the flange portion 124B, but may be in contact with the flange portion 124B. The number of the branch portions 142 is six, but is not limited thereto. The outer shape of the cross section in each of the branch portions 142 perpendicular to the direction in which the branch portion 142 extends is not particularly limited. For example, the outer shape of the cross section of the branch portion 142 may be a circular shape, a polygonal shape, a semicircular shape, or a fillet shape. Moreover, the branch portion 142 may be either solid or hollow.

The plurality of branch portions 142 have flexibility. An engagement portion 146 is formed at the distal end portion of each of the plurality of branch portions 142. The engagement portion 146 protrudes from the branch portion 142 toward the main body 12. The engagement portion 146 engages with a locking portion 148 formed on the side wall 134 of the main body 12. The engagement portion 146 is fitted into the locking portion 148 by the elasticity of the branch portion 142 and engages with the locking portion 148. The cover body 14 is attached to the main body 12 by the engagement of the engagement portion 146 with the locking portion 148.

The Bernoulli gripper 10 of the present embodiment is configured as described above. Hereinafter, the operation of the Bernoulli gripper 10 will be described.

The Bernoulli gripper 10 is supplied with compressed air through the supply port 136. The compressed air reaches the nozzles NZ through the axial flow path FP1, the branch flow path FP2, and the annular flow path FP3 in this order. The nozzle NZ blows compressed air to the recessed portion 130 in the radial direction D2 of the main body 12. At this time, negative pressure lower than the atmospheric pressure is generated at the center of the recessed portion 130 by Bernoulli's principle.

The Bernoulli gripper 10 is arranged such that the gripper surface 128 faces the workpiece in a state where air is blown out from the nozzles NZ. As a result, the workpiece is suctioned toward the suction portion 122 by the negative pressure generated at the center of the recessed portion 130, and is held in a state of being separated from the gripper surface 128.

The central portion 140 of the cover body 14 is located at a position corresponding to the center of the recessed portion 130. A plurality of branch portions 142 extend from the central portion 140 in the radial direction D2 of the main body 12 and are spaced apart from each other. Accordingly, the workpiece suctioned toward the suction portion 122 is supported in contact with the cover body 14. As a result, even when a relatively thin workpiece such as a film is held by the Bernoulli gripper 10, it is possible to suppress the workpiece suctioned toward the suction portion 122 from vibrating due to the air blown out to the radial direction D2 of the main body 12.

The peripheral edge portion 132 of the main body 12 is smoothly curved from the recessed portion 130 to the side wall 134 of the main body 12. A part of the peripheral edge portion 132 is located between the branch portions 142 and is not covered with the cover body 14. Accordingly, the flow of the air blown out from the nozzles NZ along the radial direction D2 of the main body 12 can be guided so as to be raised in the direction along the side wall 134 from the radial direction D2 by the Coanda effect. As a result, even when a relatively small workpiece such as a semi-conductor chip is held by the Bernoulli gripper 10, it is possible to suppress other workpieces located around the target workpiece from being blown off by the air blown out in the radial direction D2 of the main body 12.

As described above, the Bernoulli gripper 10 of the present embodiment can hold a workpiece properly.

In the present embodiment, the projection 144 projecting toward the main body 12 is formed in the central portion 140 of the cover body 14. Further, the fitting portion 138 to which the projection 144 is fitted is formed on the flange portion 124B of the main body 12 located at the center of the recessed portion 130. Accordingly, it is possible to suppress the displacement of the position of the cover body 14 with respect to the main body 12 due to the air or the like blown out from the nozzles NZ.

### <Second Embodiment>

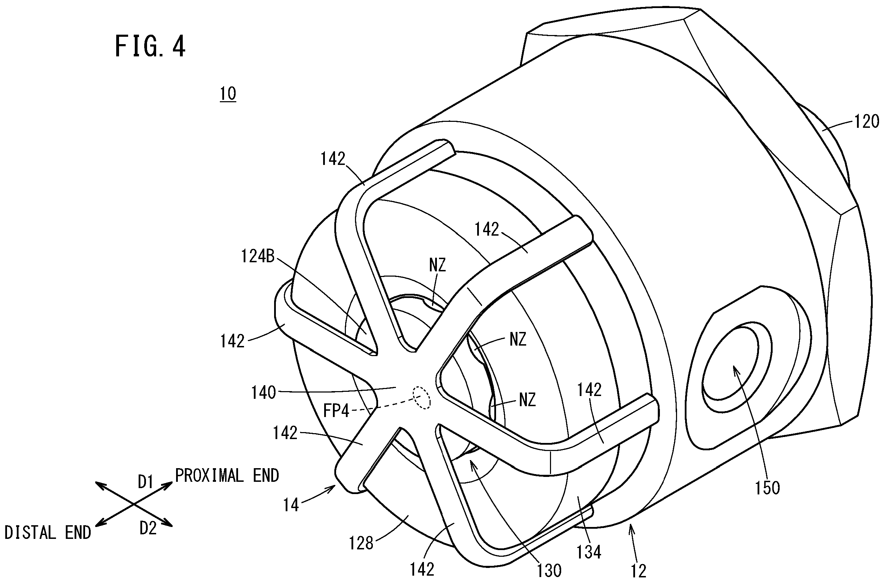

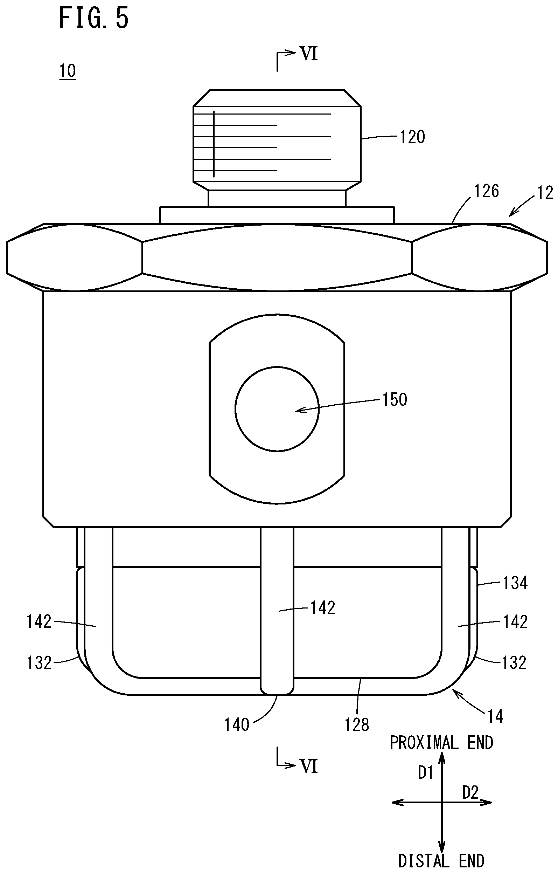

In the second embodiment, constituent elements that are the same as those described in the first embodiment are denoted by the same reference numerals for description. In the second embodiment, the description overlapping with that of the first embodiment will be omitted. FIG. 4 is a perspective view of a Bernoulli gripper 10 according to the second embodiment. FIG. 5 is a side view of the Bernoulli gripper 10 according to the second embodiment.

The Bernoulli gripper 10 of the present embodiment further includes a negative pressure breaking port 150. The negative pressure breaking port 150 opens through the side wall 134 of the main body 12, but is not limited thereto. For example, the negative pressure breaking port 150 may open at the proximal end surface 126 (see FIG. 5) of the main body 12. An air tube is connected to the negative pressure breaking port 150.

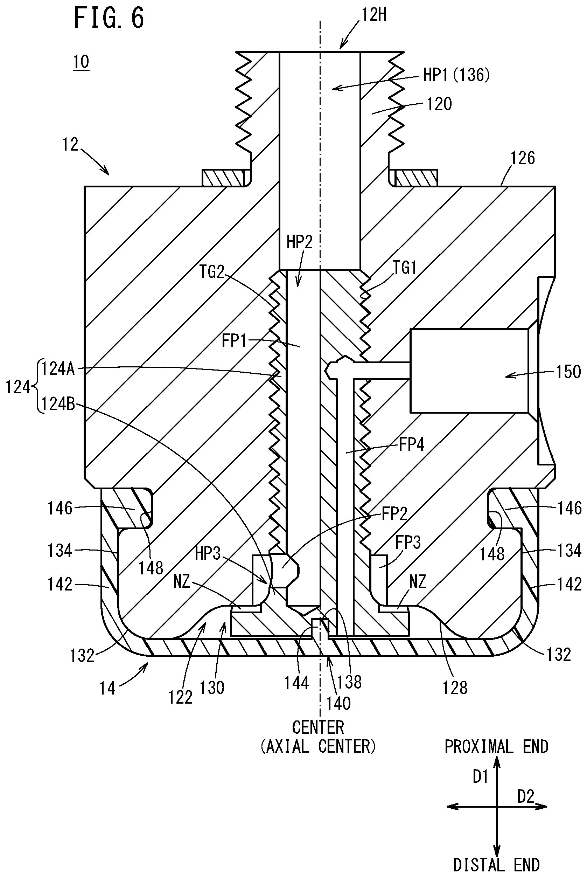

FIG. 6 is a cross-sectional view of the Bernoulli gripper 10 taken along line VI-VI of FIG. 5. The negative pressure breaking port 150 communicates with a negative pressure breaking flow path FP4. The negative pressure breaking flow path FP4 is a flow path through which air for breaking the negative pressure passes. The negative pressure breaking flow path FP4 is formed inside the main body 12 separately from the axial flow path FP1, the branch flow path FP2, the annular flow path FP3, and the nozzles NZ. One end portion of the negative pressure breaking flow path FP4 communicates with the negative pressure breaking port 150. Another end of the negative pressure breaking flow path FP4 is open at the distal end surface of the flange portion 124B of the main body 12.

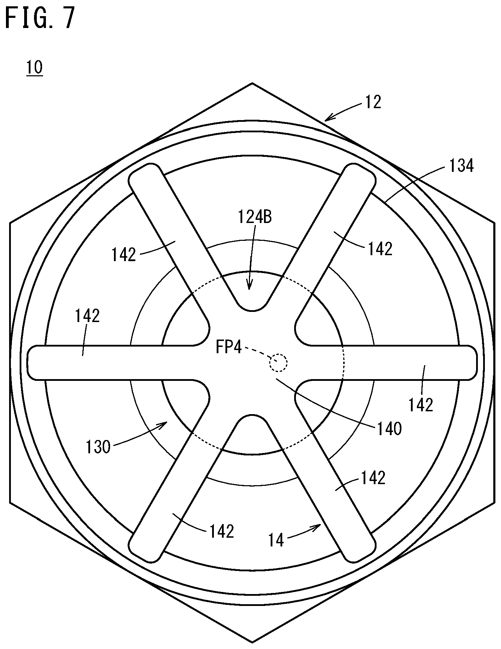

FIG. 7 is a view of the distal end side of the Bernoulli gripper 10 as viewed in the axial direction D1 (see FIG. 4). As viewed in the axial direction, the opening of the negative pressure breaking flow path FP4 overlaps the central portion 140 of the cover body 14. In other words, the opening of the negative pressure breaking flow path FP4 faces the central portion 140 of the cover body 14.

The Bernoulli gripper 10 of the present embodiment is configured as described above. Hereinafter, the operation of the Bernoulli gripper 10 will be described.

The Bernoulli gripper 10 is supplied with air through the negative pressure breaking port 150. The air is discharged from the opening of the negative pressure breaking flow path FP4 to the center of the recessed portion 130 via the negative pressure breaking flow path FP4. When air is discharged from the opening of the negative pressure breaking flow path FP4 in a state where negative pressure is generated at the center of the recessed portion 130, the air flows from between the branch portions 142 to the center of the recessed portion 130 via the clearance between the central portion 140 and the gripper surface 128. As a result, the pressure of the negative pressure rises and the negative pressure is destroyed. As a result, the holding state of the workpiece by the suction portion 122 is canceled. The opening of the negative pressure breaking flow path FP4 overlaps with the cover body 14 when viewed in the axial direction. Accordingly, it is possible to suppress the air discharged from the opening of the negative pressure breaking flow path FP4 from directly (excessively) hitting the target workpiece. Therefore, it is possible to suppress the target workpiece from being blown off by the air discharged from the opening of the negative pressure breaking flow path FP4. In addition, it is possible to suppress other workpieces located around the target workpiece from being blown away by the target workpiece that has been blown away.

The opening of the negative pressure breaking flow path FP4 may be formed so as not to overlap the cover body 14 when viewed in the axial direction. For example, the opening of the negative pressure breaking flow path FP4 may be located between the branch portions 142 in the flange portion 124B when viewed in the axial direction. In this case, the time until the negative pressure is broken can be shortened. A pressure sensor may be attached to the negative pressure breaking port 150. The pressure sensor detects negative pressure generated at the center of the recessed portion 130. Accordingly, it is possible to check whether or not the workpiece is suctioned, in addition to the use of the negative pressure breaking.

The embodiment may be modified as follows.

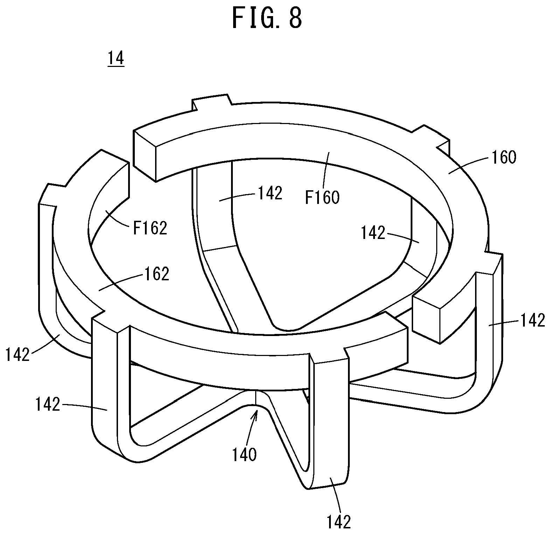

FIG. 8 is a perspective view of a cover body 14 according to Exemplary Modification 1. In FIG. 8, constituent elements that are the same as those described above are denoted by the same reference numerals. In the present exemplary modification, the description overlapping with the above description will be omitted.

In the present exemplary modification, the cover body 14 includes a first grip assisting portion 160 and a second grip assisting portion 162 instead of the engagement portion 146.

The first grip assisting portion 160 extends in a direction along the circumferential direction of the main body 12 and connects two or more branch portions 142. The first grip assisting portion 160 has an abutment surface F160 that abuts against the side wall 134 of the main body 12. The second grip assisting portion 162 extends in a direction along the circumferential direction of the main body 12, and connects two or more branch portions 142 that are not connected by the first grip assisting portion 160. The second grip assisting portion 162 has an abutment surface F162 that abuts against the side wall 134 of the main body 12.

The first grip assisting portion 160 and the second grip assisting portion 162 are not connected to each other and are separated from each other. In a state where the cover body 14 is not attached to the main body 12, the first grip assisting portion 160 and the second grip assisting portion 162 face each other.

In the present exemplary modification, the first grip assisting portion 160 and the second grip assisting portion 162 grip the side wall 134 of the main body 12 by the elasticity of the branch portions 142. In this way, the cover body 14 is attached to the main body 12. The first grip assisting portion 160 and the second grip assisting portion 162 enter the locking portion 148 to grip the side wall 134 of the main body 12, so that the cover body 14 can be firmly attached to the main body 12.

In the present exemplary modification, the cover body 14 need not necessarily include the first grip assisting portion 160 and the second grip assisting portion 162. Even in this case, the plurality of branch portions 142 can grip the side wall 134 of the main body 12 by the elasticity of the branch portions 142.

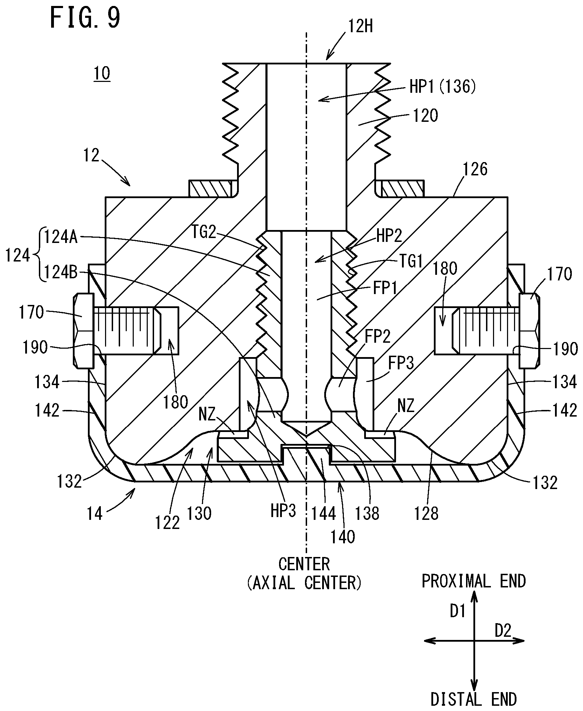

FIG. 9 is a cross-sectional view of a Bernoulli gripper 10 according to Exemplary Modification 2. In FIG. 9, constituent elements that are the same as those described above are denoted by the same reference numerals. In the present exemplary modification, the description overlapping with the above description will be omitted.

In the present exemplary modification, the engagement portion 146 is not provided at the distal end portion of each of the plurality of branch portions 142. In addition, instead of the locking portion 148, a fastening portion 180 to which a fastening member 170 can be fastened is formed. The fastening member 170 is a bolt or the like, and the fastening portion 180 is a screw hole or the like. In addition, an insertion hole 190 through which a part of the fastening member 170 can be inserted is formed in each of the plurality of branch portions 142.

In the present exemplary modification, the cover body 14 is attached to the main body 12 by fastening the fastening member 170 inserted through the insertion hole 190 to the fastening portion 180. Therefore, the cover body 14 can be firmly attached to the main body 12 as compared with a case where the cover body 14 is not fastened by the fastening member 170.

In relation to the above-described embodiments (including exemplary modifications), the following Supplementary Notes are further disclosed.

### (Supplementary Note 1)

The Bernoulli gripper (10) according to the present disclosure includes the main body (12) having a columnar shape, the suction portion (122) formed at the distal end of the main body and including the recessed portion (130) at the center of the suction portion, the nozzle (NZ) configured to blow air to the recessed portion in the radial direction (D2) of the main body, and the cover body (14) attached to the main body so as to cover the part of the suction portion and the part of the side wall (134) of the main body, wherein the main body includes the peripheral edge portion (132) smoothly curved from the recessed portion to the side wall, and wherein the cover body includes the central portion (140) located at the position corresponding to the center of the recessed portion, and the plurality of branch portions (142) extending from the central portion in the radial direction and spaced apart from each other, the branch portions extending to the side wall via the peripheral edge portion.

### (Supplementary Note 2)

In the Bernoulli gripper according to Supplementary Note 1, the projection (144) projecting toward the main body may be formed in the central portion, and the fitting portion (138) to which the projection is fitted may be formed in the main body.

### (Supplementary Note 3)

The Bernoulli gripper according to Supplementary Note 1 may further include the negative pressure breaking port (150) configured to supply air to the suction portion via the flow path (FP4) formed in the main body separately from the nozzle.

### (Supplementary Note 4)

In the Bernoulli gripper according to Supplementary Note 1, the cover body may include the elastic body.

### (Supplementary Note 5)

In the Bernoulli gripper according to Supplementary Note 1, the cover body may be attachable and detachable.

### (Supplementary Note 6)

In the Bernoulli gripper according to Supplementary Note 1, the cover body may be attached to the main body due to elasticity of the branch portions.

While the present disclosure has been described in detail, the present disclosure is not limited to the individual embodiments described above. Various additions, substitutions, changes, and partial deletions can be made in these embodiments without departing from the gist of the present disclosure or the intent of the present disclosure derived from the claims and their equivalents. These embodiments may also be implemented in combination. For example, in the above-described embodiments, the order of the operations and the order of the processes are shown as an example, and are not limited thereto. The same applies to the case where numerical values or mathematical expressions are used in the description of the above-described embodiments.

## Claims

1. A Bernoulli gripper (10) comprising:
a main body (12) having a columnar shape;
a suction portion (122) formed at a distal end of the main body and including a recessed portion (130) at a center of the suction portion;
a nozzle (NZ) configured to blow air to the recessed portion in a radial direction (D2) of the main body; and
a cover body (14) attached to the main body so as to cover a part of the suction portion and a part of a side wall (134) of the main body,
wherein the main body includes a peripheral edge portion (132) smoothly curved from the recessed portion to the side wall; and
wherein the cover body includes:
a central portion (140) located at a position corresponding to a center of the recessed portion; and
a plurality of branch portions (142) extending from the central portion in the radial direction and spaced apart from each other, the branch portions extending to the side wall via the peripheral edge portion.

2. The Bernoulli gripper according to claim 1,
wherein a projection (144) projecting toward the main body is formed in the central portion, and
a fitting portion (138) to which the projection is fitted is formed in the main body.

3. The Bernoulli gripper according to claim 1, further comprising a negative pressure breaking port (150) configured to supply air to the suction portion via a flow path (FP4) formed in the main body separately from the nozzle.

4. The Bernoulli gripper according to claim 1,
wherein the cover body comprises an elastic body.

5. The Bernoulli gripper according to claim 1,
wherein the cover body is attachable and detachable.

6. The Bernoulli gripper according to claim 1,
wherein the cover body is attached to the main body due to elasticity of the branch portions.
